# EUROPÄISCHE PATENTSCHRIFT

(11) **EP 1 730 850 B1**
(45) Veröffentlichungstag und Bekanntmachung des Hinweises auf die Patenterteilung: **08.07.2009**
(21) Anmeldenummer: 04802967.2
(22) Anmeldetag: 21.12.2004
(51) Int. Cl.: H04B 5/02, G08C 17/02, B60C 23/04

(54) **VERFAHREN UND EINRICHTUNG ZUR ÜBERTRAGUNG ZWISCHEN EINEM STEUERGERÄT UND EINEM RADMODUL**
METHOD AND DEVICE FOR TRANSMISSION BETWEEN A CONTROL APPLIANCE AND A WHEEL MODULE
PROCEDE ET DISPOSITIF DE TRANSMISSION ENTRE UN APPAREIL DE COMMANDE ET UN MODULE DE ROUE

(30) Priorität: 01.04.2004 DE 102004016833; 24.06.2004 DE 102004030671; 30.10.2004 DE 102004052737
(43) Veröffentlichungstag der Anmeldung: 13.12.2006
(73) Patentinhaber: Conti Temic microelectronic GmbH, 90411 Nürnberg (DE); CONTINENTAL AG, 30165 Hannover (DE)
(72) Erfinder: SCHILLINGER, Jakob, 85080 Gaimersheim (DE); HAHN, Karl-Heinz, 85113 Böhmfeld (DE); LEHMANN, Jörg, 30451 Hannover (DE)
(86) Internationale Anmeldenummer: PCT/DE2004/002781
(87) Internationale Veröffentlichungsnummer: WO 2005/101685

(56) Entgegenhaltungen:
- EP-A- 1 026 015
- WO-A-20/04074016
- DE-A1- 19 630 302
- JP-A- 9 237 398
- JP-A- 2004 268 612

## Beschreibung

Die Erfindung betrifft ein Verfahren und eine Einrichtung zur drahtlosen Übertragung zwischen einem in einem Reifen angeordneten Radmodul und einem außerhalb des Reifens angeordneten Steuergerät nach den Oberbegriffen der Ansprüche 1 bzw. 13.

In der Fahrzeugtechnik ist es beispielsweise aus der DE 199 24 830 A1 bekannt, ein Verfahren und eine Einrichtung zur bidirektionalen Datenübertragung zwischen einem in einen Reifen einvulkanisierten elektronischen Transponder und einem externen Steuergerät einzusetzen. Der Transponder bildet zusammen mit einer Antenne in Form einer in einer Reifenseitenwand ringsum laufenden Spule ein Radmodul. Diese Antenne ist ebenso wie ihr Gegenstück auf der Seite des Steuergeräts für eine Datenkommunikation in beide Richtungen und außerdem für eine Übermittlung von Energie zu dem Radmodul bestimmt. Die gleichzeitige Anpassung der Übertragungsmittel an diese verschiedenen Funktionen ist oftmals nur sehr schwer möglich.

Aus EP A2 1 026 015 ist ein Reifendruck-Fernüberwachungssystem und zugehöriges Verfahren bekannt. Dieses System erlaubt die automatische Erfassung der Position und des Drucks des Reifens. Von einem entfernt lokalisierten Erreger mit einer Primärspule wird ein Niederfrequenzsignal einer Sekundärspule einer Reifenüberwachungseinheit übermittelt. Als Erwiderung auf das Niederfrequenzsignal wird ein verhältnismäßig hochfrequentes Signal, welches Daten enthält, übermittelt. Die Daten werden am Erreger empfangen und in eine Auswerteeinheit geladen.

Der Erfindung liegt deshalb die Aufgabe zugrunde, ein Verfahren der gattungsgemäßen Art so anzugeben, dass es flexibel an die verschiedenen Anforderungen angepasst werden kann.

Diese Aufgabe wird erfindungsgemäß durch ein Verfahren mit den Merkmalen des Anspruches 1 gelöst. Durch die Verwendung verschiedener Frequenzen für das erste vom Steuergerät ausgesendete und das zweite vom Radmodul ausgesendete Sendesignal ergibt sich eine Entkopplung der beiden Übertragungsrichtungen. Dies gilt insbesondere, wenn sich die Frequenzen um mindestens 2 bis 3 Größenordnungen voneinander unterscheiden. Dann kann die Übertragung in jeder Richtung gesondert und gezielt entsprechend den jeweiligen Anforderungen ausgelegt werden. So kann beispielsweise für den Hinkanal (= down link), also für die Übertragung zum Radmodul, nur eine geringe Datenübertragungsrate, dafür aber die zusätzliche Möglichkeit zur Energieübertragung und für den Rückkanal (= up link), also für die Übertragung zum Steuergerät, eine höhere Datenübertragungsrate gefordert sein. Indem für das erste Sendesignal sowie für die Übertragungsmittel des Hinkanals eine niedrige Frequenz, insbesondere im Bereich einiger 10 kHz bis einiger 100 kHz, und für das zweite Sendesignal sowie für die Übertragungsmittel des Rückkanals eine höhere Frequenz, insbesondere im Bereich einiger 1 MHz bis einiger 100 MHz, gewählt wird, kann diesen ansonsten bei nur einem verfügbaren Übertragungskanal kaum zu erfüllenden Forderungen problemlos entsprochen werden. Für die höhere Frequenz ist ein Wert zwischen etwa 5 MHz und 15 MHz oder von mindestens 300 MHz besonders gut geeignet.

Vorteilhafte Ausgestaltungen des erfindungsgemäßen Verfahrens ergeben sich aus den von Anspruch 1 abhängigen Ansprüchen.

Die Variante nach Anspruch 3 kann autark betrieben werden. Es ist keine gesonderte Energiequelle, beispielsweise in Form einer nur eine endliche Betriebsdauer aufweisenden Batterie, erforderlich.

Die Ausgestaltung nach Anspruch 4 gewährleistet, dass ein insbesondere beim (Wieder-)Start weitgehend entladener, im Radmodul vorhandener Energiespeicher zunächst mittels des ersten Sendesignals aufgeladen wird und das Radmodul somit in einen betriebsbereiten Zustand versetzt wird.

Aufgrund der Maßnahme gemäß Anspruch 5 wird vermieden, dass eine Datenübertragung zum Steuergerät zu früh, d.h. bei noch nicht vollständig betriebsbereitem Radmodul gestartet wird. Fehlübertragungen lassen sich somit verhindern.

Die Varianten nach den Ansprüchen 6 und 7 zeichnen sich durch eine besondere Effizienz aus. Ein erweitertes Datentelegramm, das insbesondere gemäß Anspruch 9 zusätzliche Informationen enthält, wird nur in Sondersituationen, die durch eine tiefe Entladung des Energiespeichers gekennzeichnet sind, beispielsweise nach einem längeren Halt oder nach einem Radwechsel, gesendet. Insbesondere nach dem Start des Fahrzeuges wird als erstes ein erweitertes Datentelegramm. Ansonsten wird nur das kürzere Standard-Datentelegramm, das insbesondere gemäß Anspruch 8 aktuelle Messwerte über den Reifenzustand enthält, übermittelt. Dies spart Energie und auch Übertragungskapazität.

Die Maßnahme gemäß Anspruch 8 kann alternativ oder optional vorgesehen sein. Mit steigender Drehzahl sinkt die Dauer der Kopplungsperiode, sodass gegebenenfalls nicht genügend Zeit für die Übermittlung eines erweiterten Datentelegramms verbleibt. Bevorzugt wird deshalb ab einer gewissen Drehzahl nur das Standard-Datentelegramm gesendet. Dadurch ist keine Informationsverlust zu befürchten, da die im erweiterten Datentelegramm enthaltenen Zusatz-Informationen bereits nach dem Start oder/und bei niedriger Drehzahl übermittelt worden sind und sich während der Fahrt nicht ändern.

Die Variante gemäß Anspruch 11 ermöglicht in einfacher Weise die Übertragung sowohl von Energie als auch von Daten zum Radmodul.

Gemäß der Ausgestaltung nach Anspruch 12 kann das Steuergerät auch außerhalb des Fahrzeugs angeordnet sein. Möglich ist eine Anbringung der zugehörigen Antenne(n) an einer Stelle, an der der Reifen mit dem Radmodul vorbeibewegt wird. So lässt sich die Kommunikation mit dem Radmodul beispielsweise an der Ausfahrt eines Betriebsgeländes oder einer Betriebshalle problemlos durchführen. Vorteilhaft ist dabei die Integration der Antenne(n) des Steuergeräts als Bodenantenne(n) in die Fahrbahn.

Eine weitere Aufgabe der Erfindung besteht darin, eine Einrichtung der gattungsgemäßen Art so anzugeben, dass sie flexibel an die verschiedenen Anforderungen angepasst werden kann.

Diese Aufgabe wird erfindungsgemäß durch eine Einrichtung mit den Merkmalen des Anspruches 13 gelöst.

Vorteilhafte Ausgestaltungen der erfindungsgemäßen Einrichtung ergeben sich aus den von Anspruch 13 abhängigen Ansprüchen.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Einrichtung zur Datenübertragung zwischen einem Steuergerät im Radhaus und einem Radmodul,
- Fig. 2: ein Blockschaltbild der Einrichtung von Fig. 1,
- Fig. 3: ein Signal mit einem Standard-Datentelegramm,
- Fig. 4: ein Signal mit einem erweiterten Datentelegramm,
- Fig. 5: Zeitdiagramme von Signalen während des Anfahrens und bei Übermittlung eines erweiterten Datentelegramms,
- Fig. 6: Zeitdiagramme von Signalen bei einem Übergang von einem Standard-Datentelegramm zu einem erweiterten Datentelegramm,
- Fig. 7: Zeitdiagramme von Signalen bei einer Datenübertragung zum Radmodul,
- Fig. 8: ein Ausführungsbeispiel einer Einrichtung zur Datenübertragung zwischen einem Steuergerät mit Bodenantenne und einem Radmodul,
- Fig. 9: Zeitdiagramme von Signalen während des Überfahrens der Bodenantenne gemäß Fig. 8 und
- Fig. 10: Zeitdiagramme von Signalen bei einer alternativen Betriebsweise der Einrichtung gemäß Fig. 1 und 2.

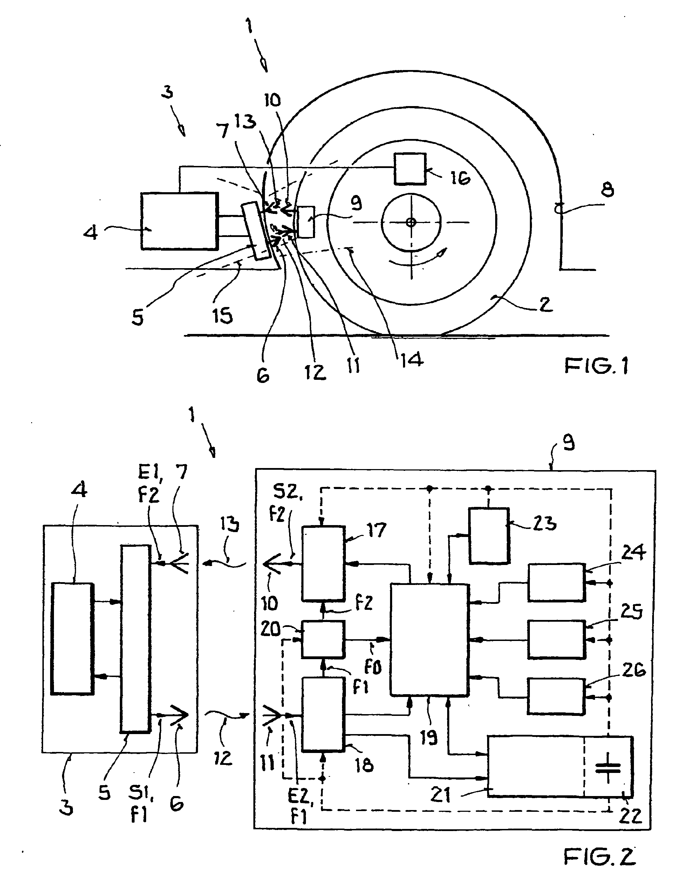

Einander entsprechende Teile sind in den Figuren 1 bis 10 mit denselben Bezugszeichen versehen.

Bei dem in Fig. 1 gezeigten Ausführungsbeispiel einer Einrichtung 1 zur Datenübertragung handelt es sich um ein in einem Kraftfahrzeug eingesetztes Sensor-Transponder-System zur Übermittlung von Sensordaten von einem Reifen 2 des Kraftfahrzeugs zu einem Steuergerät 3. Letzteres enthält eine stationäre Kontrolleinheit 4 und eine an die stationäre Kontrolleinheit 4 elektrisch angeschlossene stationäre Sende-/Empfangseinheit 5 mit einer LF(= Low Frequency)-Sendeantenne 6 und einer HF(= High Frequency)-Empfangsantenne 7. Die stationäre Kontrolleinheit 4 und die Sende-/Empfangseinheit 5 können als kombinierte Baugruppe ausgebildet sein. Das Steuergerät 3 oder zumindest dessen Sende-/Empfangseinheit 5 ist in einem Radhaus 8 des Reifens 2 montiert. Ihm ist ein innerhalb des Reifens 2 an der Innenseite der Lauffläche befestigtes Radmodul 9 mit einer HF-Sendeantenne 10 und einer LF-Empfangsantenne 11 zugeordnet.

Zwischen der LF-Sendeantenne 6 und der LF-Empfangsantenne 11 einerseits und der HF-Sendeantenne 10 und der HF-Empfangsantenne 7 andererseits besteht jeweils ein drahtloser Übertragungskanal 12 bzw. 13. Der Übertragungskanal 12 (= down link) ist niederfrequent und der Übertragungskanal 13 (= up link) hochfrequent ausgebildet. Die für eine niedrigere Frequenz f1 ausgelegten LF-Sendeantenne 6 und LF-Empfangsantenne 11 sind jeweils als drahtgewickelte Luftspule ausgebildet, wohingegen die für eine höhere Frequenz f2 ausgelegten HF-Sendeantenne 10 und HF-Empfangsantenne 7 jeweils als Spule aus mindestens einer Platinenschleife gebildet sind. Prinzipiell können die HF-Sendeantenne 10 und die HF-Empfangsantenne 7 aber auch als gewickelte (Luft-)Spule ausgeführt sein. Jedenfalls erfolgt die Verbindung über die Übertragungskanäle 12 und 13 jeweils im Wesentlichen aufgrund magnetischer Kopplung.

Die LF- und HF-Sendeantenne 6 bzw. 10 sowie die LF- und HF-Empfangsantenne 11 bzw. 7 haben jeweils einen für sie charakteristischen Wirkungsbereich, in den sie senden, bzw. aus dem sie empfangen können. Im Ausführungsbeispiel gemäß Fig. 1 sind die LF-Sendeantenne 6 und die HF-Empfangsantenne 7 der stationären Sende-/Empfangseinheit 5 so aufgebaut, dass ihre Wirkungsbereiche trotz ihrer unterschiedlichen Betriebsfrequenzen weitgehend identisch sind, und das Steuergerät 3 einen für Sende- und Empfangsrichtung im Wesentlichen einheitlichen Steuergerät-Wirkungsbereich 14 aufweist. Gleiches gilt für das Radmodul 9. Es hat einen für Sende- und Empfangsrichtung im Wesentlichen einheitlichen Radmodul-Wirkungsbereich 15. Grundsätzlich können die Wirkungsbereiche der LF-Antennen und die der HF-Antennen auseinander fallen.

An die Kontrolleinheit 4 ist ein am Reifen 2 zur Drehzahlerfassung angeordneter Drehzahlsensor 16 angeschlossen. Der Drehzahlsensor 16 ist optional.

Im Ausführungsbeispiel ist pro Reifen 2 ein Radmodul 9 und ein Steuergerät 3 vorgesehen. Grundsätzlich kann aber auch ein gemeinsames Steuergerät 3 für mehrere Reifen 2 und Radmodule 9 vorgesehen sein. Dann sind mehrere Sende-/Empfangseinheiten 5 an eine gemeinsame stationäre Kontrolleinheit 4 angeschlossen.

Wenn mehrere Steuergeräte 3 vorhanden sind, können sie untereinander und auch mit einem übergeordneten in Fig. 1 nicht gezeigten Kraftfahrzeug-Steuergerät insbesondere mittels eines Datenbussystems in einer Kommunikationsverbindung stehen. Die Abfrage der einzelnen Radmodule 9 durch das Kraftfahrzeug-Steuergerät erfolgt je nach Abfrageintervall und Geschwindigkeit des Datenbussystems mehr oder weniger parallel oder seriell.

Das Blockschaltbild gemäß Fig. 2 gibt vor allem Details des Radmoduls 9 der Einrichtung 1 wieder. Das Radmodul 9 umfasst neben der HF-Sendeantenne 10 und der LF-Empfangsantenne 11 auch eine Sendeeinheit 17, eine Empfangseinheit 18, eine zentrale Steuereinheit 19, eine interne Clock-Einheit 20, eine Energiemanagementeinheit 21 mit einem Energiespeicher 22 in Gestalt eines Bufferkondensators, einen nichtflüchtigen Datenspeicher 23 in Gestalt eines E²PROMs sowie einen Drucksensor 24, einen Temperatursensor 25 und gegebenenfalls weitere Sensoren, von denen exemplarisch ein Sensor 26 dargestellt ist.

Abgesehen von den beiden Antennen 10 und 11, gegebenenfalls von den Sensoren 24, 25 und 26 sowie je nach Auslegung auch von dem Energiespeicher 22 sind die übrigen Komponenten des Radmoduls 9 vorzugsweise als ein integrierter Baustein, beispielsweise als ein ASIC, ausgebildet. Dadurch resultiert eine sehr kompakte Baugröße, sodass sich das Radmodul 9 gut im Inneren des Reifens 2 unterbringen lässt.

Das Radmodul 9 ist sehr flexibel hinsichtlich der möglichen Einsatz- und Betriebsmodi. So kann es beispielsweise für unterschiedliche (Sende-/Empfangs-)Modulationsverfahren, Datenübertragungsraten, Datencodierungen, Sendefrequenzen ausgelegt werden. Dies erfolgt teils bereits während der Hardware-Fertigung und teils erst mittels der Programmierung danach. Zusätzliche Hardware- oder/und Software-Funktionen können so problemlos mit vorgesehen werden. Beispielsweise können am Radmodul 9 zwei Sicherheitseingänge (Ports) vorgesehen sein, die zusammen mit einer Kurzschlussschleife zur Sicherung des Radmoduls 9 gegen ein unerlaubtes Entfernen aus dem Reifen 2 dienen.

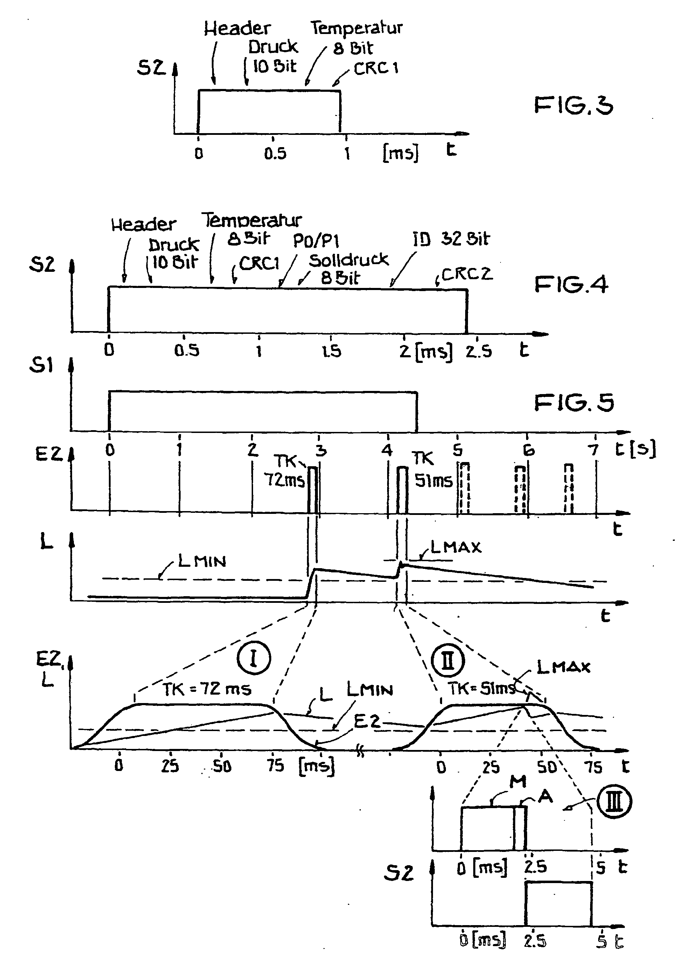

Im Folgenden wird die Funktionsweise der Einrichtung 1 auch unter Bezugnahme auf die Figuren 3 bis 7 beschrieben.

Von der Sende-/Empfangseinheit 5 des Steuergeräts 3 wird ein Sendesignal S 1 mit der Frequenz f1 von 125 kHz erzeugt und mittels des Übertragungskanals 12 zum Radmodul 9 übermittelt. Dort wird es von der Empfangseinheit 18 als Empfangssignal E2 empfangen, wenn sich ein Wirkungsbereich der LF-Sendeantenne 6 und ein Wirkungsbereich der LF-Empfangsantenne 11 zumindest teilweise überlappen.

Diese Wirkungsbereiche sind durch die aufgrund der Sendesignalleistung endlichen Reichweite und durch die von der jeweiligen Antennenform abhängigen Antennen-Charakteristik bestimmt. Die LF-Sendeantenne 6 und die LF-Empfangsantenne 11 weisen über den Umfang des Reifens 2 betrachtet nur einen beschränkten Kopplungsbereich auf. In Abhängigkeit von der Reifendrehstellung kommt es zu einem Eintritt und einem Austritt aus dem Kopplungsbereich, also einer zeitlich begrenzten Kopplung. Pro Reifenumdrehung ergibt sich eine Kopplungsperiode TK, deren zeitliche Dauer von der aktuellen Reifendrehzahl abhängt. Der Kopplungsbereich kann mittels eines Winkelsegments bezüglich einer Reifenumdrehung, mittels eines entsprechenden Teils der Umfangslänge des Reifens 2 oder mittels der Kopplungsperiode TK charakterisiert werden, wobei die beiden zuerst genannten Größen im Gegensatz zur Kopplungsperiode TK nicht von der Reifendrehzahl abhängen.

Während der Kopplungsperiode TK können dem Radmodul 9 über das Sendesignal S1 sowohl Energie als auch Daten zugeführt werden. Die Energiemanagementeinheit 21 gewinnt aus dem dann empfangenen Empfangssignal E2 Energie und lädt den Energiespeicher 22 auf, aus dem alle Komponenten des Radmoduls 9 bei ausreichendem Ladezustand L mit Energie versorgt werden. Die Versorgungsleitungen sind in Fig. 2 mit gestrichelten Linien dargestellt. Die Energiemanagementeinheit 21 hält außerdem das Radmodul 9 in den Abfragepausen während der Fahrt wach, sie sorgt also zwischen zwei von Null verschiedenen Empfangssignalen E2 für die Empfangsbereitschaft des Radmoduls 9.

Aus dem Empfangssignal E2 wird auch die interne Clock-Einheit 20 gespeist, die aus der Frequenz f1 des Empfangssignal E2 eine Frequenz f0 zur Taktung der Steuereinheit 19 und eine Frequenz f2 zur Rücksendung eines Sendesignals S2 vom Radmodul 9 zum Steuergerät 3 ableitet. Dabei wird die Frequenz f2, die im Beispiel einen Wert von 13,56 MHz hat, mittels Frequenzvervielfachung generiert.

Das Sendesignal S2 beinhaltet zumindest Daten über den aktuellen Reifenzustand, der mittels der Sensoren 24 bis 26 erfasst wird. Es wird über den Übertragungskanal 13 zurück zum Steuergerät 3 übertragen und dort als Empfangssignal E1 empfangen.

Die Einrichtung 1 und insbesondere ihre Übertragungskanäle 12 und 13 sind also für eine bidirektionale Kommunikation zwischen dem Steuergerät 3 und dem Radmodul 9 sowie für eine Energieversorgung des Radmoduls 9 durch das Steuergerät 3 ausgelegt.

Der Umfang der Daten, die mittels des Sendesignals S2 zum Steuergerät 3 übertragen werden, kann sich nach verschiedenen Betriebsparametern, wie dem Ladezustand L des Energiespeichers 22, der Dauer der Kopplungsperiode TK, der Drehzahl des Reifens 2, dem Umfang der vorangegangenen Datenübertragung oder einer ausdrücklichen Datenanforderung durch das Steuergerät 3, richten. Für die Datenübertragung mittels des Sendesignals S2 stehen zwei verschiedene Typen von Datentelegrammen zur Verfügung, zum einen das in Fig. 3 gezeigte Standard-Datentelegramm und zum anderen das in Fig. 4 gezeigte erweiterte Datentelegramm.

Das kürzere Standard-Datentelegramm umfasst im Ausführungsbeispiel einen aktuellen Druckmesswert in 10 Bit-Auflösung sowie einen aktuellen Temperaturmesswert in 8 Bit-Auflösung. Es hat beispielsweise eine Länge von etwa 960 µs. Demgegenüber hat das erweiterte Datentelegramm beispielsweise eine Länge von 2,4 ms, wobei die jeweiligen Längen beider Datentelegramm-Typen von der eingestellten Baudrate und auch von der Headerlänge abhängen. Das erweiterte Datentelegramm enthält zusätzliche Informationen über den Solldruck des Reifens 2 und/oder zur Identifikation. Anhand der als einfache Identnummer oder als eine andere den Reifen charakterisierende Kennung ausgebildeten Identifikationsinformation kann beispielsweise ein Reifenwechsel erkannt und der dann möglicherweise andere Solldruck des neuen Reifens 2 im Steuergerät 3 übernommen werden. Gegebenenfalls kann im Steuergerät 3 der Solldruck auch aus der übermittelten Identifikationsinformation abgeleitet werden, sodass eine zusätzliche Übermittlung des Solldrucks überflüssig ist.

Das erweiterte Datentelegramm wird insbesondere bei einem Neustart der Einrichtung 1 nach erstmaliger vollständiger Aufladung des Energiespeichers 22 gesendet. Diese Situation, die sich beim Anfahren des Fahrzeugs nach einem längeren Stillstand einstellt, liegt den Zeitdiagrammen von Fig. 5 zugrunde. Gezeigt sind verschiedene Signalverläufe über der Zeit t.

Vom Steuergerät 3 wird zunächst permanent das niederfrequente Sendesignal S1 ausgesendet. Das im Radmodul 9 daraufhin empfangene Empfangssignal E2 setzt sich aufgrund des begrenzten Kopplungsbereichs aus einzelnen - im Beispiel von Fig. 5 aus zwei - Empfangspulsen, deren zeitliche Dauer der jeweiligen Kopplungsperiode TK entspricht, zusammen.

Der Eintritt in den niederfrequenten Kopplungsbereich kann im Radmodul 9 anhand der ansteigenden Flanke des jeweiligen Empfangspulses erkannt werden.

Beim Anfahren ist der Energiespeicher 22 vollständig entladen. Während der ersten gezeigten Kopplungsperiode TK mit einer Dauer von 72 ms wird der Energiespeicher 22 aufgeladen. Der mit I gekennzeichnete vergrößerte Ausschnitt verdeutlicht, dass der Ladezustand L dabei zwar einen Schwellwert LMIN für die erforderliche Mindestladung überschreitet, aber einen vorgebbaren Maximalwert LMAX, beispielsweise für vollständige Aufladung, noch nicht erreicht. Dies geschieht erst während der folgenden Kopplungsperiode TK (siehe Ausschnitt II).

Mit Erreichen des vorgegebenen maximalen Ladezustands LMAX wird die Datenübertragung vom Radmodul 9 zum Steuergerät 3 freigegeben und gestartet. Im Beispiel von Fig. 5 geschieht dies noch innerhalb der gleichen Kopplungsperiode TK (siehe Ausschnitt III). Die Steuereinheit 19 veranlasst eine aktuelle Messwerterfassung M durch die Sensoren 24 bis 26 und ein Anschwingen A eines Sende-Oszillators in der Sendeeinheit 17. Die Messwerterfassung M dauert dabei etwa 1 bis 2 ms und das Anschwingen A des Sende-Oszillators etwa 0,3 ms (siehe oberes Zeitdiagramm von Ausschnitt III). Danach wird ein Sendesignal S2 mit einem erweiterten Datentelegramm versendet (siehe unteres Zeitdiagramm von Ausschnitt III). Durch diese Aktivitäten des Radmoduls 9 sinkt der Ladezustand L wieder, bleibt aber zunächst noch über dem Schwellwert LMIN.

Im Steuergerät 3 wird das Empfangssignal E1 empfangen und daraufhin das Aussenden des Sendesignals S1 beendet. Im Folgenden werden dann bei Durchlaufen des Kopplungsbereichs solange keine Empfangspulse im Radmodul 9 empfangen, bis eine erneute Abfrage durch ein von Null verschiedenes Sendesignal S1 vorliegt. In Fig. 5 sind die folgenden - theoretisch möglichen - Kopplungsperioden TK deshalb nur mittels gestrichelter Empfangspulse angedeutet. Aufgrund der fehlenden Zufuhr von neuer Ladeenergie sinkt der Ladezustand L wieder unter den Schwellwert LMIN.

Im Unterschied zum Beispiel von Fig. 5 ist es auch denkbar, dass nach Erreichen des maximalen Ladezustands LMAX die Datenübertragung zum Steuergerät 3 erst bei Beginn der folgenden Kopplungsperiode TK gestartet wird. Das Senden des Sendesignals S2 erfolgt dann getriggert durch die ansteigende Flanke des nächsten Empfangspulses im Empfangssignal E2. Dadurch wird eine möglichst vollständige Übertragung des erweiterten Datentelegramms sichergestellt. Die Entscheidung darüber, ob nach Erreichen des maximalen Ladezustands LMAX unmittelbar (= ungetriggert) oder getriggert bei Beginn der kommenden Kopplungsperiode TK mit der Datenübertragung zum Steuergerät 3 begonnen wird, kann auch von der aktuellen Reifendrehzahl und damit von der aktuellen Dauer der Kopplungsperiode TK abhängig gemacht werden.

Die Detektion der ansteigenden Flanken im Empfangssignal E2 entspricht einer Felderkennung des elektromagnetischen Feldes des ausgesendeten Sendesignals S1, sobald die LF-Empfangsantenne 11 aufgrund der Reifendrehung in den Kopplungsbereich (= Antennenüberdeckung) eintritt. Ein mit diesem Eintritts-Zeitpunkt synchronisiertes Senden des Sendesignals S2 gewährleistet auch bei einer hohen Reifendrehzahl, die mit einer Fahrzeug-Geschwindigkeit von bis zu 300 km/h einhergeht, eine definierte und sichere Übermittlung des Datentelegramms während der Kopplungsperiode TK.

Die Übermittlung eines erweiterten Datentelegramms oder eines Standard-Datentelegramms erfolgt im Normalbetrieb automatisch. Ist das Radmodul 9 entladen, wie beispielsweise beim Anfahren, wird ein erweitertes Datentelegramm abgesetzt. Wird das Radmodul 9 während einer Kopplungsperiode TK vollständig aufgeladen, sendet es sofort ein erweitertes Datentelegramm ab. Ansonsten wird über mehrere Reifenumdrehungen Energie gesammelt, bis der maximale Ladezustand LMAX erreicht ist, um dann getriggert beim nächsten Beginn einer Kopplungsperiode TK das erweiterte Datentelegramm zu senden. Bei weiterer kontinuierlicher Abfrage mittels des Sendesignals S1 bleibt der Ladezustand L oberhalb des Schwellwerts LMIN (= Reset-Schwelle). Nach dem erstmaligen Senden eines erweiterten Datentelegramms werden vom Radmodul 9 nur noch Standard-Datentelegramme ausgesendet (= Fast-Mode). Vorzugsweise erfolgt dies jeweils getriggert durch den Beginn einer Kopplungsperiode TK. Ein erweitertes Datentelegramm wird erst wieder gesendet (= Slow-Mode), wenn der Ladezustand L unter den Schwellwert LMIN gesunken ist, oder bei ausdrücklicher Anforderung, die vom Steuergerät 3 beispielsweise durch Übermittlung eines entsprechenden Befehls oder auch dadurch erfolgen kann, dass innerhalb des niederfrequenten Sendesignals S1 eine kurze Sendelücke von einigen wenigen Millisekunden vorgesehen wird.

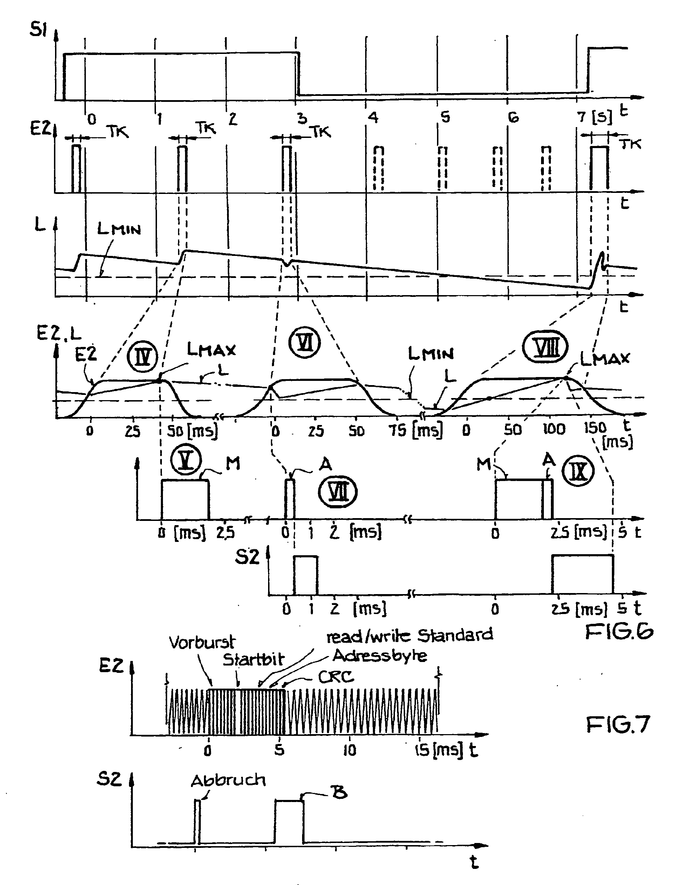

Der Übergang von einem Standard-Datentelegramm zu einem erweiterten Datentelegramm ist in Fig. 6 gezeigt. Zu Beginn befindet sich die Einrichtung 1 im Fast-Mode, d.h. bei vorliegender Abfrage durch das Sendesignal S1 wird zunächst während einer oder mehrerer Kopplungsperioden TK der Energiespeicher 22, dessen Ladezustand L nicht unter den Schwellwert LMIN gesunken ist, wieder bis zum Maximalwert LMAX aufgeladen (siehe vergrößerten Ausschnitt IV). Am Ende der Kopplungsperiode TK, innerhalb der die vollständige Aufladung erreicht ist, wird getriggert durch die abfallende Flanke des zugehörigen Empfangspulses im Empfangssignal E2 die Messwerterfassung M gestartet (siehe Ausschnitt V). Mit Beginn der nächsten Kopplungsperiode TK wird getriggert durch die ansteigende Flanke des zugehörigen Empfangspulses das Anschwingen A des Sende-Oszillators und danach das Senden des Sendesignals S2 mit einem Standard-Datentelegramm veranlasst (siehe Ausschnitte VI und VII).

Es folgt eine längere Zeitspanne, innerhalb der keine Abfrage stattfindet, sodass der Ladezustand L unter den Schwellwert LMIN sinkt und das Radmodul 9 in den Slow-Mode-Betrieb wechselt. Bei der nächsten Abfrage mittels des Sendesignals S1 erfolgt im gezeigten Beispiel innerhalb einer einzigen Kopplungsperiode TK die vollständige Ladung bis zum maximalen Ladezustand LMAX und im unmittelbaren Anschluss die Messwerterfassung M, das Anschwingen A des Sende-Oszillators und das Senden des Sendesignals S2 mit einem erweiterten Datentelegramm (siehe Ausschnitte VIII und IX).

Außer vom Ladezustand L kann die Wahl des auszusendenden Datentelegrammtyps auch von der Reifendrehzahl abhängig gemacht werden. Die aus einer Fahrzeug-Geschwindigkeit v ableitbare Reifendrehzahl bestimmt die Dauer der Kopplungsperiode TK. So ergeben sich beispielsweise bei einer Fahrzeug-Geschwindigkeit v von 5 km/h oder 120 km/h eine Kopplungsperiode TK von 108 ms bzw. 4,5 ms. Die im Radmodul 9 beispielsweise anhand eines Drehzahlsensors oder anhand des zeitlichen Abstands zwischen zwei Empfangspulsen und dem bekannten Abrollumfang ermittelte aktuelle Reifendrehzahl wird mit einem Drehzahl-Schwellwert verglichen. Bei Unterschreiten des Drehzahl-Schwellwerts kann, beispielsweise wenn eine diesbezügliche Anforderung des Steuergeräts 3 vorliegt, ein erweitertes Datentelegramm gesendet werden. Bei Überschreiten des Drehzahl-Schwellwerts wird stets ein Standard-Datentelegramm gesendet.

Der nichtflüchtige Datenspeicher 23 des Radmoduls 9 kann während der Fahrt über das Steuergerät 3, aber auch bereits während der Produktion des ASICs und des Reifens 2 oder während eines Fahrzeug-Services über ein Hand-Steuergerät gezielt beschrieben oder/und ausgelesen werden. Das Hand-Steuergerät ermöglicht eine Kommunikation mit dem Radmodul 9. Außer zur Energieübertragung kann das Sendesignal S1 nämlich auch zur Übermittlung von Daten und Befehlen herangezogen werden.

Die Daten- oder Befehls-Übertragung wird mit dem für die Abfrage des Radmoduls 9 üblichen Sendesignal S1 mit einem 125 kHz-Dauerträger eingeleitet. Bei ausreichendem Ladezustand L versucht das Radmodul 9 ein Standard-Datentelegramm abzusetzen. Sobald das Steuergerät 3 im Empfangssignal E1 den Header des Standard-Datentelegramms erkennt, unterbricht es den 125 kHz-Dauerträger des Sendesignals S1 für etwa 1ms. Aufgrund dieser Sendelücke wird der Sendevorgang im Radmodul 9 abgebrochen und stattdessen ein Daten-Befehls-Empfangspfad aktiviert. Dann startet das Steuergerät 3 mit der Daten-Befehls-Übertragung im Sendesignal S1. Anstelle der Unterbrechung kann im Sendesignal S1 je nach verwendeter Modulationsart auch eine charakteristische Nullfolge vorgesehen werden, die vom Radmodul 9 erkannt wird.

In Fig. 7 sind die relevanten Abschnitte vom Zeitverlauf des Empfangssignals E2 und des Sendesignals S2 bei einer Datenübertragung vom Steuergerät 3 zum Radmodul 9 gezeigt. Im oben dargestellten Empfangssignal E2 ist der Wechsel vom 125 kHz-Dauerträger auf die Daten-/Befehls-Übertragung und im unten dargestellten Sendesignal S2 der nach etwa 300 µs erfolgende Abbruch des Standard-Datentelegramms zu erkennen. Nach dem Empfang der Daten und/oder des Befehls erfolgt bei Bedarf eine Bestätigung B, beispielsweise in Form von 32 Bit Blockdaten, im Sendesignal S2.

Anhand dieses Verfahrens wird eine Synchronisation auf den Beginn der Kopplungsperiode TK sichergestellt und der verfügbare Kopplungsbereich wird möglichst effizient genutzt, sodass bei einer Fahrzeuggeschwindigkeit von bis zu etwa 50 km/h Daten und/oder Befehle zum Radmodul 9 übermittelt werden können.

Auf diese Weise lassen sich verschiedene Befehle und Daten an das Radmodul 9 übertragen. Beispiele sind ein Read/Write-Befehl, der ein Auslesen oder ein Beschreiben des Datenspeichers 23 bewirkt, Fehler-Meldungen, ein Befehl zum Übergang in einen Test-Mode oder eine Empfangsbestätigung. Mittels eines Read-Befehls lassen sich insbesondere auch andere als die in den Datentelegrammen ohnehin enthaltenen Informationen vom Radmodul 9 abfragen. Die so angeforderten Daten (z.B. 32 Bit) werden in einer der kommenden Kopplungsperioden TK zum Steuergerät 3 übertragen.

Bei den zum Steuergerät 3 übertragenen Daten kann es sich um ein Fehler-Telegramm handeln. So wird dem Steuergerät 3 beispielsweise ein Fehler in der Messwerterfassung eines der Sensoren 24 bis 26, ein Empfangsfehler, ein Kalibrierungsfehler oder ein Fehler beim Beschreiben des Datenspeichers 23 angezeigt. Andererseits kann aber auch ein erfolgreiches Beschreiben des Datenspeichers 23 zurückgemeldet werden. Außerdem lässt sich das Steuergerät 3 mittels eines vom Radmodul 9 gesendeten Befehls in einen vorübergehenden Stand-By-Betriebszustand schalten oder sogar zeitweise komplett ausschalten, beispielsweise wenn der Energiespeicher 22 voll ist.

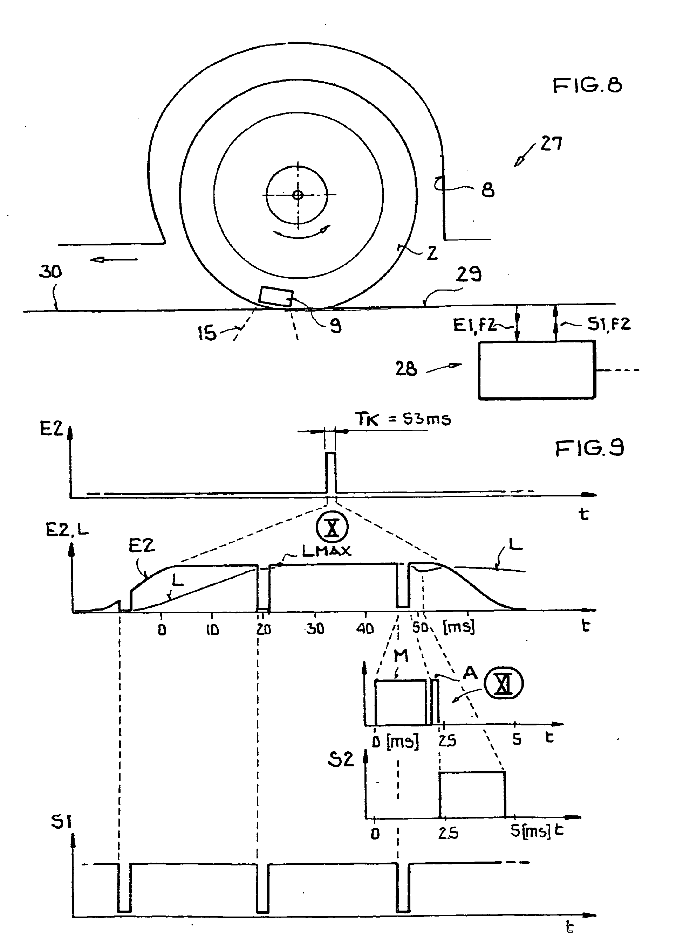

In Fig. 8 ist ein anderes Ausführungsbeispiel einer Einrichtung 27 zur Datenübertragung gezeigt. Die Einrichtung 27 enthält kein im Radhaus 8 angeordnetes Steuergerät 3, sondern ein Steuergerät 28 mit einer Bodenantenne 29, die in eine Fahrbahn 30 integriert ist. Aus der schematisierten Darstellung von Fig. 8 ist nicht ersichtlich, dass die Bodenantenne 29 eine LF-Bodensendeantenne und eine HF-Bodenempfangsantenne umfasst. Beide sind durch in der Fahrbahn 30 verlegte Leiterschleifen gebildet. Sie können auch als verteilte Antennen-Arrays aufgebaut oder durch mehrere verteilt angeordnete Teil-Antennen gebildet sein. Die Bodenantenne 29 ist zumindest in der Richtung, in der sie vom Reifen 2 überrollt wird, mindestens so lang wie der Abrollumfang des Reifens 2, sodass es beim Überrollen mindestens zu einer Kopplung mit dem Radmodul 9 kommt.

Im Folgenden wird die Funktionsweise der Einrichtung 27 mit der Bodenantenne 29 auch unter Bezugnahme auf Fig. 9 beschrieben.

Anhand der Einrichtung 27 können auch ohne Umbau am Fahrzeug Messwerte für den Reifenzustand erfasst werden. Bevorzugt ist die Bodenantenne 29 an einer Stelle innerhalb der Fahrbahn 30 angeordnet, die von dem Fahrzeug regelmäßig passiert wird, wie beispielsweise die Ein-/Ausfahrt eines Betriebsgeländes oder einer Garage.

Die Bodenantenne 29 weist in der Richtung, in der sie vom Reifen 2 überrollt wird, eine Koppellänge auf, die zumindest die vollständige Aufladung des Energiespeichers 22 und einen Datentransfer innerhalb einer Kopplungsperiode TK ermöglicht.

Die zugehörigen Signale sind in Fig. 9 dargestellt. Das Steuergerät 29 sendet ein Sendesignal S1, das kurze Signal-Unterbrechungen (= Sendelücken) des niederfrequenten Dauerträgers in der Größenordnung von 2 bis 5 ms aufweist. Dadurch wird ein erweitertes Datentelegramm im vom Radmodul 9 zurück gesendeten Sendesignal S2 erzwungen. Auch das im Radmodul 9 vorliegende Empfangssignal E2 hat kurze Signal-Unterbrechungen (siehe vergrößerten Ausschnitt X).

Die kurzen Signal-Unterbrechungen bewirken außerdem, dass einem für ein getriggertes Senden eingestellten Radmodul 9 nach Erreichen des maximalen Ladezustands LMAX der für die Triggerung ausschlaggebende Beginn einer neuen Kopplungsperiode TK vorgetäuscht wird. Mit der abfallenden Flanke der kurzen Signal-Unterbrechungen wird also die Messwerterfassung M und mit der ansteigenden Flanke der kurzen Signal-Unterbrechungen das Anschwingen A des Sende-Oszillators veranlasst. Danach wird das Sendesignal S1 mit einem erweiterten Datentelegramm gesendet (siehe Ausschnitt XI).

Das Steuergerät 28 mit der Bodenantenne 29 lässt sich somit auch in Verbindung mit dem im Radhaus 8 angeordneten Steuergerät 3 einsetzen, ohne dass es zu einer Fehlfunktion kommt.

Bei einem weiteren Ausführungsbeispiel ist die Einrichtung 1 für eine Frequenz f2 von 433,92 MHz ausgelegt. Im Unterschied zu einer Frequenz f2 von 13,56 MHz, bei der die hochfrequente Übertragung (= up link) einen ähnlich begrenzten Kopplungsbereich aufweist wie die niederfrequente Übertragung (= down link), ist bei 433,92 MHz die Kopplung zwischen der HF-Sendeantenne 10 und der HF-Empfangsantenne 7 unabhängig von der Reifendrehstellung stets gegeben. Einen ausreichenden Ladezustand L vorausgesetzt kann die Übertragung vom Radmodul 9 zum Steuergerät 3 dann jederzeit, also insbesondere auch ungetriggert, erfolgen.

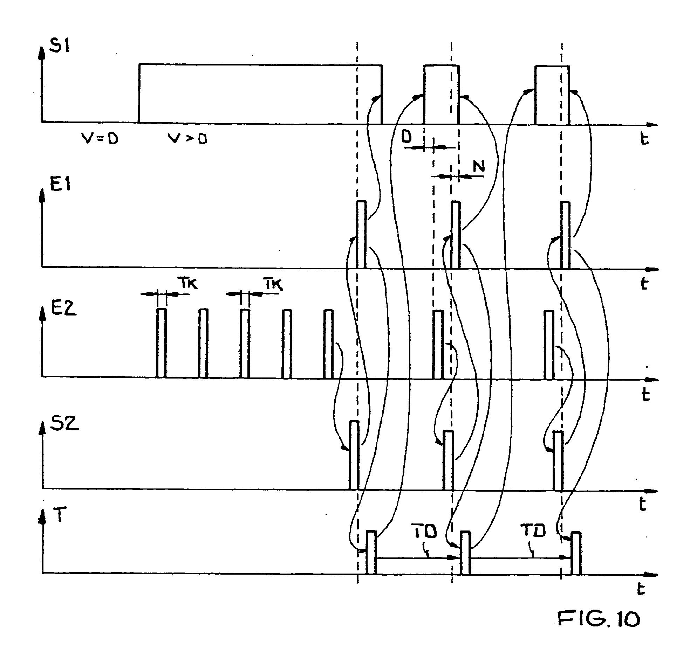

Die zugehörigen Signale sind in Fig. 10 dargestellt. Nach dem Anfahren (v > 0) wird zunächst der weitgehend entladene Energiespeicher 22 mittels eines permanent gesendeten niederfrequenten Sendesignals S1 aufgeladen. Das Empfangssignal E2 enthält aufgrund der für die niederfrequente Übertragung nach wie vor beschränkten Kopplung einzelne Empfangspulse. Nach Erreichen des maximalen Ladezustands LMAX wird das Sendesignal S2 ohne Triggerung auf den Beginn einer niederfrequenten Kopplungsperiode TK gesendet. Nach dessen Empfang im Steuergerät 3 wird das Aussenden des Sendesignals S1 bis zur nächsten niederfrequenten Kopplungsperiode TK gestoppt.

Deren Beginn wird im Steuergerät 3 anhand des vom Drehzahlsensor 16 gelieferten Messwerts und eines Triggersignals T prognostiziert. Nach jedem Empfangspuls des Empfangssignals E1 wird im Triggersignal T ein Zeitmarker gesetzt, ausgehend von dem das Steuergerät 3 unter Berücksichtigung einer aus dem Drehzahl-Messwert ermittelten aktuellen Umdrehungsdauer TD des Reifens 2 den erwarteten Beginn der nächsten niederfrequenten Kopplungsperiode TK bestimmt. Mit einem vorgebbaren zeitlichen Vorlauf O startet das Steuergerät 3 dann die Aussendung des Sendesignals S1 wieder, um sie mit einem ebenfalls vorgebbaren zeitlichen Nachlauf N erneut zu beenden, sobald die zugehörige Antwort des Radmoduls 9 empfangen worden ist.

Bei diesem Ausführungsbeispiel wird also im Normalbetrieb während jeder niederfrequenten Kopplungsperiode TK ein aktuelles Datentelegramm vom Radmodul 9 angefordert und an das Steuergerät 3 übermittelt.

Prinzipiell kann der Start des Sendesignals S1 auch auf andere Weise angestoßen werden. Denkbar ist eine am rotierenden Reifen 2 oder an einer zugehörigen Achse angebrachte Markierung, die bei jeder Umdrehung ein Zeitglied im Steuergerät 3 ansteuert. Das Zeitglied schaltet nach einer fest vorgebbaren oder einer adaptiv bestimmten Zeitverzögerung das Senden des Sendesignals S1 frei.

Der Vorlauf O und der Nachlauf N stellen sicher, dass während der kompletten Dauer jeder niederfrequenten Kopplungsperiode TK ein von Null verschiedenes Sendesignal S1 zur Abfrage und zur Energieversorgung des Radmoduls 9 ansteht. Andererseits sendet das Steuergerät 3 normalerweise auch nur dann das Sendesignal S1, wenn eine niederfrequente Kopplung absehbar ist. Dadurch wird ein nutzloses Abstrahlen von LF-Sendeleistung durch das Steuergerät 3 verhindert.

## Patentansprüche

1. Verfahren zur drahtlosen Übertragung zwischen einem in einem Reifen (2) angeordneten Radmodul (9) und einem außerhalb des Reifens (2) angeordneten Steuergerät (3; 28), bei dem
- ein erstes Sendesignal (S1) von einer Antenne (6) des Steuergeräts (3; 28) zu einer Antenne (11) des Radmoduls (9) übertragen wird,
- Daten mittels eines zweiten Sendesignals (S2) vom Radmodul (9) zum Steuergerät (3; 28) übertragen werden, und
- für das erste Sendesignal (S1) eine andere Frequenz (f1) vorgesehen wird als für das zweite Sendesignal (S2),
**dadurch gekennzeichnet, dass**
- das erste Sendesignal (S1) während einer Kopplungsperiode (TK), innerhalb der sich bei rotierendem Reifen (2) ein mitrotierender Wirkungsbereich (15) der Antenne (11) des Radmoduls (9) und ein stationärer Wirkungsbereich (14) der Antenne (6) des Steuergeräts (3; 28) zumindest teilweise überlappen, von der Antenne (11) des Radmoduls (9) empfangen wird,
- ein Beginn der Kopplungsperiode (TK) vom Radmodul (9) erkannt wird, und
- die Datenübertragung vom Radmodul (9) zum Steuergerät (3; 28) nach dem Erkennen des Beginns der Kopplungsperiode (TK) gestartet wird.

2. Verfahren nach Anspruch 1,
**dadurch gekennzeichnet, dass**
die Frequenz (f1) des ersten Sendesignal (S1) niedriger ist als die Frequenz des zweiten Sendesignals (S2).

3. Verfahren nach Anspruch 1 oder 2,
**dadurch gekennzeichnet, dass**
aus dem ersten Sendesignal (S1) Energie zur Versorgung des Radmoduls (9) gewonnen wird.

4. Verfahren nach einem der Ansprüche 1 bis 3,
3. **dadurch gekennzeichnet, dass**
das erste Sendesignal (S1) vom Steuergerät (3; 28) zumindest zeitweise über mehrere Kopplungsperioden (TK) hinweg ausgesendet wird.

5. Verfahren nach Anspruch 3,
**dadurch gekennzeichnet, dass**
mit der gewonnenen Energie ein Energiespeicher (22) geladen wird und die Datenübertragung vom Radmodul (9) zum Steuergerät (3; 28) nach Erreichen eines vorgegebenen Ladezustands (LMAX) des Energiespeichers (22) gestartet wird.

6. Verfahren nach Anspruch 5,
**dadurch gekennzeichnet, dass**
das zweite Sendesignal (S2) mit einem erweiterten Datentelegramm ausgesendet wird, wenn der Energiespeicher (22) ausgehend von einer weitgehenden Entladung den vorgegebenen Ladezustand (LMAX) erreicht hat.

7. Verfahren nach Anspruch 5 oder 6,
**dadurch gekennzeichnet, dass**
das zweite Sendesignal (S2) mit einem Standard-Datentelegramm ausgesendet wird, wenn ein Ladezustand (L) des Energiespeichers seit der vorangegangenen Datenübertragung vom Radmodul (9) zum Steuergerät (3; 28) einen vorgegebenen Ladezustands-Schwellwert (LMIN) nicht unterschritten hat.

8. Verfahren nach einem der vorangehenden Ansprüche,
**dadurch gekennzeichnet, dass**
eine Drehzahl des Reifens (2) oder eine dazu proportionale Größe erfasst und mit einem Drehzahl-Schwellwert verglichen wird und das zweite Sendesignal (S2) insbesondere nur bei Unterschreiten des Drehzahl-Schwellwerts mit einem erweiterten Datentelegramm gesendet werden kann.

9. Verfahren nach einem der vorangehenden Ansprüche,
**dadurch gekennzeichnet, dass**
ein aktueller Messwert zumindest eines im Reifen (2) angeordneten Reifenzustandssensors (24, 25, 26) mittels eines vom zweiten Sendesignal (S2) umfassten Standard-Datentelegramms vom Radmodul (9) zum Steuergerät (3; 28) übertragen wird.

10. Verfahren nach einem der vorangehenden Ansprüche 1 bis 8,
**dadurch gekennzeichnet, dass**
ein aktueller Messwert zumindest eines im Reifen (2) angeordneten Reifenzustandssensors (24, 25, 26) zusammen mit einem Sollwert für diesen Messwert oder mit einer den Reifen (2) charakterisierende Kennung mittels eines vom zweiten Sendesignal (S2) umfassten erweiterten Datentelegramms vom Radmodul (9) zum Steuergerät (3; 28) übertragen werden.

11. Verfahren nach einem der vorangehenden Ansprüche,
**dadurch gekennzeichnet, dass**
Daten vom Steuergerät (3; 28) zum Radmodul (9) übertragen werden, indem vom Steuergerät (3; 28)
- nach einem zumindest teilweisen Empfang des zweiten Sendesignals (S2) im ersten Sendesignal (S1) eine vorgegebene Unterbrechung vorgenommen oder eine vorgegebene Nullfolge gesendet wird,
- das erste Sendesignal (S1) danach mit den vom Steuergerät (3; 28) zum Radmodul (9) zu übertragenden Daten beaufschlagt wird,
und im Radmodul (9)
- die Unterbrechung oder die Nullfolge im ersten Sendesignal (S1) erkannt wird, und
- das erste Sendesignal (S1) mit den Daten vom Steuergerät (3; 28) empfangen wird.

12. Verfahren nach einem der vorangehenden Ansprüche,
**dadurch gekennzeichnet, dass**
das erste und das zweite Sendesignal (S1, S2) mittels einer in einer Fahrbahn (30) angeordneten Bodenantenne (29) des Steuergeräts (28) gesendet bzw. empfangen wird.

13. Einrichtung zur drahtlosen Übertragung zwischen einem in einem Reifen (2) angeordneten Radmodul (9) und einem außerhalb des Reifens (2) angeordneten Steuergerät (3; 28), bei der
- das Steuergerät (3; 28) eine Antenne (6) zur Aussendung eines ersten Sendesignals (S1) umfasst,
- das Radmodul (9) eine Antenne (11) zum Empfang des ersten Sendesignals (S1) umfasst,
- Mittel (7,10, 17) zur Übertragung von Daten vom Radmodul (9) zum Steuergerät (3; 28) mittels eines zweiten Sendesignals (S2) vorgesehen sind, und
- die Antennen (6, 11) zur Aussendung und zum Empfang des ersten Sendesignals (S1) für eine andere Frequenz (f1) ausgelegt sind als die Mittel (7,10,17) zur Übertragung von Daten vom Radmodul (9) zum Steuergerät (3; 28),
**dadurch gekennzeichnet, dass**
- die Antenne (6) zur Aussendung des ersten Sendesignals (S1) einen Steuergerät-Wirkungsbereich (14) und die Antenne (11) zum Empfang des ersten Sendesignals (S1) einen Radmodul-Wirkungsbereich (15) aufweist, sodass bei rotierendem Reifen (2) eine Kopplung zwischen dem Radmodul (9) und dem Steuergerät (3; 28) besteht, wenn sich der mitrotierende Radmodul-Wirkungsbereich (15) und der stationäre Steuergerät-Wirkungsbereich (14) zumindest teilweise überlappen, und das Radmodul (9) Mittel (18, 19) zum Erkennen des Beginns der Kopplung zwischen dem Radmodul (9) und dem Steuergerät (3; 28) und zur Initiierung der Datenübertragung vom Radmodul (9) zum Steuergerät (3; 28) nach erkanntem Beginn der Kopplung umfasst.

14. Einrichtung nach Anspruch 13,
**dadurch gekennzeichnet, dass**
die Frequenz (f1) des ersten Sendesignals (S1) niedriger ist die Frequenz des zweiten Sendesignals (S2).

15. Einrichtung nach Anspruch 13 oder 14,
**dadurch gekennzeichnet, dass**
das Radmodul (9) einen mittels des ersten Sendesignals (S1) aufladbaren Energiespeicher (22) umfasst.

16. Einrichtung nach einem der Anspruch 13 bis 15,
**dadurch gekennzeichnet, dass**
im Reifen (2) ein Reifenzustandssensor (24, 25, 26) angeordnet ist.

17. Einrichtung nach einem der Ansprüche 13 bis 16,
**gekennzeichnet durch**
eine bidirektionale Datenübertragung.

18. Einrichtung nach einem der Ansprüche 13 bis 17,
**dadurch gekennzeichnet, dass**
das Steuergerät (28) eine in einer Fahrbahn (30) angeordnete Bodenantenne (29) umfasst.

## Claims

1. A method for the wireless transfer between a wheel module (9) arranged in a tyre (2) and a control device (3; 28) arranged outside the tyre (2), in which
- a first transmission signal (S1) is transferred from an antenna (6) of the control device (3; 28) to an antenna (11) of the wheel module (9)
- data are transferred by means of a second transmission signal (S2) from the wheel module (9) to the control device (3; 28), and
- for the first transmission signal (S1) a different frequency (f1) is provided than for the second transmission signal (S2),
**characterized in that**
- the first transmission signal (S1) is received by the antenna (11) of the wheel module (9) during a coupling period (TK) within which while the tyres (2) are rotating, an also rotating area of influence (15) of the antenna (11) of the wheel module (9) and a stationary area of influence (14) of the antenna (6) of the control device (3; 28) overlap at least partially
- a beginning of the coupling period (TK) is recognised by the wheel module (9), and
- the data transfer from the wheel module (9) to the control device (3; 28) is started after the beginning of the coupling period (TK) is detected.

2. A method according to claim 1,
**characterized in that**
the frequency (f1) of the first transmission signal (S1) is lower than the frequency of the second transmission signal (S2).

3. A method according to either of claims 1 or 2,
**characterized in that**
power for supplying the wheel module (9) is obtained from the first transmission signal (S1).

4. A method according to any one of claims 1 to 3,
**characterized in that**
the first transmission signal (S1) is transmitted by the control device (3; 28) at least partially over the course of several coupling periods (TK).

5. A method according to claim 3,
**characterized in that**
with the power obtained, a power storage unit (22) is charged and the data transfer from the wheel module (9) to the control device (3; 28) is started after a specified charge state (LMAX) of the power storage unit (22) is reached.

6. A method according to claim 5,
**characterized in that**
the second transmission signal (S2) is transmitted with an extended data telegram when the power storage unit (22) has reached the specified charge state (LMAX), on the assumption of an extensive discharge.

7. A method according to either of claims 5 or 6,
**characterized in that**
the second transmission signal (S2) is transmitted with a standard data telegram when a charge state (L) of the power storage unit has not failed to reach a specified charge state threshold value (LMIN) since the preceding data transfer from the wheel module (9) to the control device (3; 28).

8. A method according to any one of the preceding claims,
**characterized in that**
a rotational speed of the tyre (2) of a size proportionate to it is recorded and compared with a rotational speed threshold value, and the second transmission signal (S2) can in particular be transmitted with an extended data telegram only when the rotational speed threshold value is not reached.

9. A method according to any one of the preceding claims,
**characterized in that**
a current measured value of at least one tyre state sensor (24, 25, 26) arranged in the tyre (2) is transferred by means of a standard data telegram which is included in the second transmission signal (S2) from the wheel module (9) to the control device (3; 28).

10. A method according to any one of the preceding claims 1 to 8,
**characterized in that**
a current measured value of at least one tyre state sensor (24, 25, 26) arranged in the tyre (2), together with a set value for this measured value, or with an identifier which characterises the tyre (2) are transferred from the wheel module (9) to the control device (3; 28) by means of an extended data telegram which is included in the second transmission signal (S2).

11. A method according to any one of the preceding claims,
**characterized in that**
data is transmitted from the control device (3; 28) to the wheel module (9), in such a manner that from the control device (3; 28)
- after an at least partial reception of the second transmission signal (S2), a specified interruption is conducted in the first transmission signal (S1) or a specified zero sequence is transmitted
- the first transmission signal (S1) is then loaded with the data to be transferred from the control device (3; 28) to the wheel module (9),
and in the wheel module (9)
- the interruption or the zero sequence is detected in the first transmission signal (S1), and
- the first transmission signal (S1) is received with the data from the control device (3; 28).

12. A method according to any one of the preceding claims,
**characterized in that**
the first and the second transmission signals (S1, S2) are transmitted or received by means of a ground antenna (29) of the control device (28) which is arranged in a roadway (30).

13. A device for the wireless transfer between a wheel module (9) arranged in a tyre (2) and a control device (3; 28) arranged outside the tyre (2), in which
- the control device (3; 28) comprises an antenna (6) for transmitting a first transmission signal (S1)
- the wheel module (9) comprises an antenna (11) for receiving the first transmission signal (S1)
- means (7, 10, 17) for transferring data from the wheel module (9) to the control device (3; 28) by means of a second transmission signal (S2) are provided, and
- the antennae (6, 11) for transmitting and receiving the first transmission signal (S1) are designed for a different frequency (f1) than the means (7, 10, 17) for transferring data from the wheel module (9) to the control device (3; 28),
**characterized in that**
- the antenna (6) for transmitting the first transmission signal (S1) comprises a control device area of influence (14) and the antenna (11) for receiving the first transmission signal (S1) comprises a wheel module area of influence (15), so that when the tyres (2) are rotating, a coupling exists between the wheel module (9) and the control device (3; 28) when the wheel module area of influence (15) which also rotates and the stationary control device area of influence (14) overlap at least partially, and
- the wheel module (9) comprises means (18, 19) for detecting the beginning of the coupling between the wheel module (9) and the control device (3; 28) and for initiating the data transfer from the wheel module (9) to the control device (3; 28) after the beginning of the coupling is detected.

14. A device according to claim 13,
**characterized in that**
the frequency (f1) of the first transmission signal (S1) is lower than the frequency of the second transmission signal (S2).

15. A device according to either of claims 13 or 14,
**characterized in that**
the wheel module (9) comprises an energy storage unit (22) which is chargeable by means of the first transmission signal (S1).

16. A device according to any one of claims 13 to 15,
**characterized in that**
a tyre state sensor (24, 25, 26) is arranged in the tyre (2).

17. A device according to any one of claims 13 to 16,
**characterized by**
a bi-directional data transfer.

18. A device according to any one of claims 13, to 17,
**characterized in that**
the control device (28) comprises a ground antenna (29) arranged in a roadway (30).

## Revendications

1. Procédé de transmission sans fil entre un module de roue (9) disposé dans un pneu (2) et un appareil de commande (3 ; 28) disposé à l'extérieur du pneu (2), dans lequel
- un premier signal d'émission (S1) est transmis à partir d'une antenne (6) de l'appareil de commande (3 ; 28) vers une antenne (11) du module de roue (9),
- des données sont transmises au moyen d'un deuxième signal d'émission (S2) à partir du module de roue (9) vers l'appareil de commande (3 ; 28), et
- il est prévu pour le premier signal d'émission (S1) une autre fréquence (f1) que pour le deuxième signal d'émission (S2),
**caractérisé en ce que**
- le premier signal d'émission (S1) est reçu par l'antenne (11) du module de roue (9) pendant une période de couplage (TK) à l'intérieur de laquelle, quand le pneu (2) est en rotation, une zone d'action (15), qui est en rotation solidairement, de l'antenne (11) du module de roue (9) et une zone d'action stationnaire (14) de l'antenne (6) de l'appareil de commande (3 ; 28) se chevauchent au moins partiellement,
- un début de la période de couplage (TK) est détecté par le module de roue (9), et
- la transmission de données à partir du module de roue (9) vers l'appareil de commande (3 ; 28) est lancée après la détection du début de la période de couplage (TK).

2. Procédé selon la revendication 1,
**caractérisé en ce que**
la fréquence (f1) du premier signal d'émission (S1) est plus faible que la fréquence du deuxième signal d'émission (S2).

3. Procédé selon la revendication 1 ou 2,
**caractérisé en ce que**,
de l'énergie est acquise à partir du premier signal d'émission (S1) pour alimenter le module de roue (9).

4. Procédé selon une des revendications 1 à 3,
**caractérisé en ce que**
le premier signal d'émission (S1) est émis par l'appareil de commande (3 ; 28) au moins par intermittence pendant plusieurs périodes de couplage (TK).

5. Procédé selon la revendication 3,
**caractérisé en ce**
**qu'**un accumulateur d'énergie (22) est chargé avec l'énergie acquise, et en ce que la transmission de données à partir du module de roue (9) vers l'appareil de commande (3 ; 28) est lancée une fois atteint un état de charge prédéfini (LMAX) de l'accumulateur d'énergie (22).

6. Procédé selon la revendication 5,
**caractérisé en ce que**
le deuxième signal d'émission (S2) est émis avec une trame de données étendue quand l'accumulateur d'énergie (22) a atteint l'état de charge prédéfini (LMAX) en partant d'une décharge importante.

7. Procédé selon la revendication 5 ou 6,
**caractérisé en ce que**
le deuxième signal d'émission (S2) est émis avec une trame de données standard quand un état de charge (L) de l'accumulateur d'énergie n'est pas passé sous une valeur de seuil de l'état de charge prédéfinie (LMIN) depuis la transmission de données précédente à partir du module de roue (9) vers l'appareil de commande (3 ; 28).

8. Procédé selon une des revendications précédentes,
**caractérisé en ce**
**qu'**une vitesse de rotation du pneu (2) ou une grandeur qui lui est proportionnelle est détectée et comparée à une valeur de seuil de la vitesse de rotation, et en ce que le deuxième signal d'émission (S2) ne peut en particulier être émis qu'en cas de passage sous la valeur de seuil de la vitesse de rotation avec une trame de données étendue.

9. Procédé selon une des revendications précédentes,
**caractérisé en ce**
**qu'**une valeur de mesure actuelle d'au moins un capteur d'état de pneu (24, 25, 26) disposé dans le pneu (2) est transmise à partir du module de roue (9) vers l'appareil de commande (3 ; 28) au moyen d'une trame de données standard englobée par le deuxième signal d'émission (S2).

10. Procédé selon une des revendications précédentes 1 à 8,
**caractérisé en ce**
**qu'**une valeur de mesure actuelle d'au moins un capteur d'état de pneu (24, 25, 26) disposé dans le pneu (2) est transmise à partir du module de roue (9) vers l'appareil de commande (3 ; 28) en même temps qu'une valeur de seuil pour cette valeur de mesure ou en même temps qu'une identification caractérisant le pneu (2) au moyen d'une trame de données étendue englobée par le deuxième signal d'émission (S2).

11. Procédé selon une des revendications précédentes,
**caractérisé en ce**
**que** des données sont transmises à partir de l'appareil de commande (3 ; 28) vers le module de roue (9), par le fait que l'appareil de commande (3 ; 28),
- après une réception, au moins partielle, du deuxième signal d'émission (S2), effectue une interruption prédéfinie ou émet une séquence nulle prédéfinie,
- le premier signal d'émission (S1) est ensuite alimenté avec les données devant être transmises à partir de l'appareil de commande (3 ; 28) vers le module de roue (9),
et, dans le module de roue (9),
- l'interruption ou la séquence nulle est détectée dans le premier signal d'émission (S1), et
- le premier signal d'émission (S1) est reçu avec les données de l'appareil de commande (3 ; 28).

12. Procédé selon une des revendications précédentes,
**caractérisé en ce**
**que** le premier et le deuxième signal d'émission (S1, S2) sont envoyés ou reçus au moyen d'une antenne de sol (29) de l'appareil de commande (28) disposée dans une chaussée (30).

13. Equipement de transmission sans fil entre un module de roue (9) disposé dans un pneu (2) et un appareil de commande (3 ; 28) disposé à l'extérieur du pneu (2), dans lequel
- l'appareil de commande (3 ; 28) englobe une antenne (6) pour l'émission d'un premier signal d'émission (S1),
- le module de roue (9) englobe une antenne (11) pour la réception du premier signal d'émission (S1),
- des moyens (7, 10, 17) sont prévus pour la transmission de données à partir du module de roue (9) vers l'appareil de commande (3 ; 28) au moyen d'un deuxième signal d'émission (S2), et
- les antennes (6, 11) pour l'émission et la réception du premier signal d'émission (S1) sont calculées pour une fréquence (f1) autre que les moyens (7, 10, 17) de transmission de données à partir du module de roue (9) vers l'appareil de commande (3 ; 28),
**caractérisé en ce que**
- l'antenne (6) d'émission du premier signal d'émission (S1) présente une zone d'action (14) d'appareil de commande, et l'antenne (11) de réception du premier signal d'émission (S1) présente une zone d'action (15) de module de roue, de sorte que, quand le pneu (2) est en rotation, il existe un couplage entre le module de roue (9) et l'appareil de commande (3 ; 28) si la zone d'action (15) de module de roue qui tourne solidairement et la zone d'action d'appareil (14) de commande stationnaire se chevauchent au moins partiellement, et
- **en ce que** le module de roue (9) englobe des moyens (18, 19) de détection du début du couplage entre le module de roue (9) et l'appareil de commande (3 ; 28) et de lancement de la transmission de données à partir du module de roue (9) vers l'appareil de commande (3 ; 28) après la détection du début du couplage.

14. Procédé selon la revendication 13,
**caractérisé en ce que**
la fréquence (f1) du premier signal d'émission (S1) est plus faible que la fréquence du deuxième signal d'émission (S2).

15. Equipement selon la revendication 13 ou 14,
**caractérisé en ce que**
le module de roue (9) englobe un accumulateur d'énergie (22) pouvant être chargé au moyen du premier signal d'émission (S1).

16. Equipement selon une des revendications 13 à 15,
**caractérisé en ce**
**qu'**un capteur d'état de pneu (24, 25, 26) est disposé dans le pneu (2).

17. Equipement selon une des revendications 13 à 16,
**caractérisé par**
une transmission de données bidirectionnelle.

18. Equipement selon une des revendications 13 à 17,
**caractérisé en ce**
**que** l'appareil de commande (28) englobe une antenne de sol (29) disposée dans une chaussée.
